(19) Europäisches Patentamt
European Patent Office
Office européen des brevets

(11) **EP 1 754 951 B1**

(12) **EUROPEAN PATENT SPECIFICATION**

(45) Date of publication and mention
of the grant of the patent:
**05.01.2011 Bulletin 2011/01**

(51) Int Cl.:
*G01B 11/00* (2006.01)     *G01B 11/02* (2006.01)
*G01B 11/08* (2006.01)     *G01B 11/24* (2006.01)

(21) Application number: **05447188.3**

(22) Date of filing: **16.08.2005**

(54) **Method for the simultaneous calibration, qualification and synchronization of a non-contact probe**

Verfahren zur simultanen Kalibrierung, Qualifizierung und Synchronisierung einer berührungslosen Sonde

Procédé de calibration, qualification et synchronisation simultanée d'une sonde sans contact

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**21.02.2007 Bulletin 2007/08**

(73) Proprietor: **3D SCANNERS LTD**
**Castle Donington**
**Derby**
**DE74 2SA (GB)**

(72) Inventors:
• **De Jonge, Lieven**
  **3090 Overijse (BE)**
• **Van Coppenolle, Bart**
  **3210 Linden (BE)**
• **Vanderstraeten, Denis**
  **1348 Louvain-la-Neuve (BE)**

(74) Representative: **Paemen, Liesbet R.J. et al**
**De Clercq & Partners cvba**
**Edgard Gevaertdreef 10 a**
**9830 Sint-Martens-Latem (BE)**

(56) References cited:
**EP-A- 1 361 414     WO-A-00/39522**
**WO-A-00/41141     WO-A-01/07866**

• **PATENT ABSTRACTS OF JAPAN vol. 2000, no. 09, 13 October 2000 (2000-10-13) -& JP 2000 180103 A (AGENCY OF IND SCIENCE &TECHNOL), 30 June 2000 (2000-06-30)**

**Description**

**FIELD OF THE INVENTION**

The present invention relates to a method for the calibration, qualification and synchronization of a non-contact probe on a localizer in a single step procedure, using a single reference object, in which synchronization, calibration and qualification are performed simultaneously.

**BACKGROUND OF THE INVENTION**

Generally a non-contact probe comprises of one or more emitter sources and one or more receivers. An emitter source projects waves, for example light waves, on the object of interest; the receiver(s) comprising for example a camera, capture(s) the returning waves from the object. For instance, if the receiver is a CCD-camera, it will take one or more shots of the object. By moving the object relative to the non-contact probe or *vice versa,* shots of the complete object can be taken, i.e. the object is being scanned. Each shot represents a one-dimensional (1D), two-dimensional (2D) or three-dimensional (3D) projection of the object depending on the physical form and working principle of the receiver(s). To obtain accurate 3D points on the surface of the object, relative to a fixed coordinate system, from multiple shots the following system parameters are preferably required:

1. the 3D position of the emitter source(s) relative to the receiver(s);
2. the 3D position and orientation of the emitted waves, relative to the receiver(s), coming from the emitter source(s);
3. the characteristics such as focal point of lenses of the receivers used in the non-contact probe;
4. the dimensions and measuring resolution of the receiver(s); and
5. the 3D position and orientation of the non-contact probe or the object relative to a fixed coordinate system, for each receiver capture.

The actual values of the parameters 1 to 4 are calculated during the calibration. Some of the actual values of parameter 5 are calculated during the qualification procedure, others are given values readily obtainable from the object-non-contact probe set-up. When these parameters are calculated for the given non-contact probe, the conversion, also called compensation, from receiver readings to accurate 3D points can be performed.

To be able to move the non-contact probe relative to the object, the probe is mounted on a localizer. This localizer can be a structure, portable or non-portable, on which the probe is mounted, like for example a tripod. This localizer can also be a structure with moving axes, motorized or non-motorized, where the probe is mounted on the end of said axes, dependent to all other axes, like for example a robot, a milling machine or coordinate measuring machine (CMM). These last types of localizer can have the possibility to record the position and/or the rotation of the probe.

Some of the state-of-the-art techniques actually calculate parameters 1 to 5 explicitly using dedicated measurements in a sequential manner. Adjusting these parameters is difficult because of their complex interactions and adjustment can be time consuming.

Other state-of-the-art techniques for calibration and qualification do not calculate these parameters explicitly. In the first step, the receiver readings are first transformed in one, two or three dimensions, depending on whether the receiver itself is capable of measuring one, two or three dimensions. In this *calibration* step a receiver reading in receiver units is transformed to a point in e.g. SI units. The calibration can take several phenomena into account; for example, correcting the perspective since the object is not always parallel to the receiver or scaling correctly the readings. Finally, it must model correctly systematic reading errors in the receiver(s) - which is a complex operation.

The second step, the *qualification,* consists of determining the accurate position and orientation of the non-contact probe relative to a fixed coordinate system. The qualification procedure is generally performed by the end-user using special artifacts or other measuring equipment. The qualification procedure often requires an essential manual alignment of the artifact/measuring equipment with the non-contact probe.

Both steps, calibration and qualification, are based on some parameters that are tuned or optimized to obtain the 3D points accurately. Most state of the art algorithms determine the values of the parameters for the two steps separately, usually scanning different artifacts with known features, dimensions, etc. A method to generate the parameters with an integrated approach using one single artifact and a general function to convert directly a receiver reading into a three dimensional point has been recently disclosed (EP 1 361 414). This function corresponds to a sequence of calibration and qualification and, therefore, depends on many parameters similar to the ones used in the classical de-coupled technique. By expressing the conversion with one function, all interactions between the parameters are considered. Also, if the object being measured is known, the influence of a single parameter can directly be measured in terms of accuracy of the resulting 3D point.

Measurement using such technique relies on accurate determination of the probe position and/or orientation by the localiser for a given probe reading. Any error or lack of accuracy leads to a less precise calibration and qualification, and consequently costly readjustment. When taking measurements, the frequency of the receiver readings and the frequency of localizer readings rarely match or, the frequencies match but the phases are different. For example, a continuously moving probe may generate a high number of probe readings during movement, but this may not be matched by the same number of localizer readings in a given time period. Alternatively, the same numbers of readings are performed but a delay occurs. The difference is due to incompatibility between the electronics of the detector and localizer which are not synchronised. The result is that for each receiver reading there is commonly no corresponding localizer reading. The accuracy and precision of the calibration is consequently reduced. To overcome the problem, the electronic circuitry of both the detector and the localizer may be adapted to provide reading information at the same frequency and in synchronization. However, the adapted circuitry must be specialised and bespoke according to the output type of the respective devices. Should the same localizer be used with several different probes, electronic synchronization would entail a corresponding number of sets of adapted circuitry, so increasing costs. In more complex situations, a receiver obtains multiple readings in a periodic manner, each reading provided with a time stamp but the precise time stamp of each reading in one cycle cannot be synchronised. The synchronization with the localizer data cannot even be obtained with adapting hardware circuitry.

EP 1 361 414 describes a method for calibration and qualification simultaneously of a non-contact probe. WO 00/39522 describes a non-contact positioning apparatus for positioning a surface working, testing or inspecting device relative to a surface. WO 00/41141 describes a method for tessellation of a surface based on a slope. JP 2000180103 describes CMM gauge calibration and calibration method for a CMM. WO 01/07866 describes a system for detection of the surface geometry of an object.

The present invention provides an adaptation to the technique described in (EP 1 361 414). It overcomes the problem of asynchronous data in the probe and localizer by mathematically identifying the time stamp of every receiver reading using a synchronization model with a few parameters and interpolating the corresponding localiser data for this time stamp. The parameters of the synchronization model are computed simultaneously during calibration and qualification.

## BRIEF DESCRIPTION OF THE FIGURE

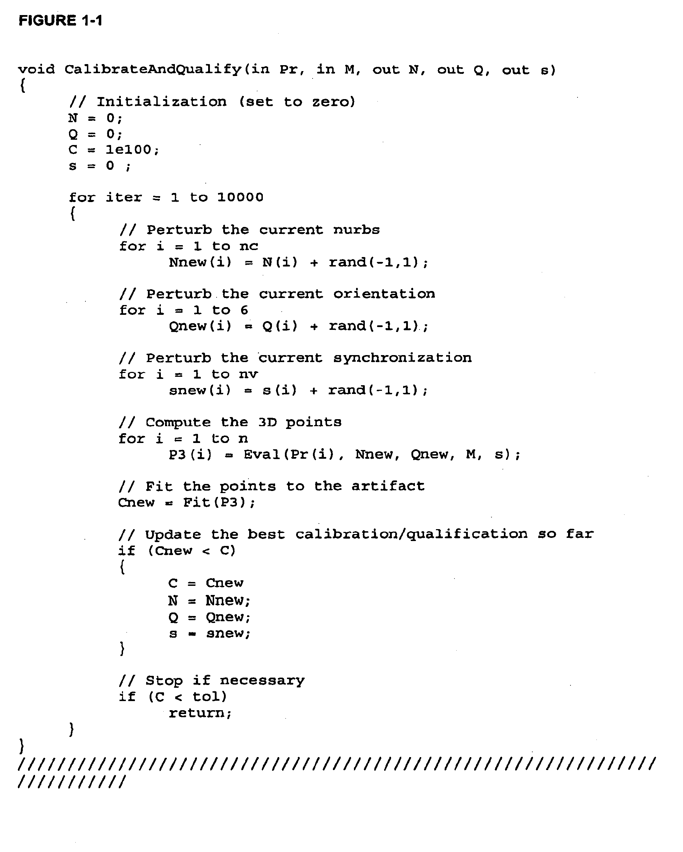

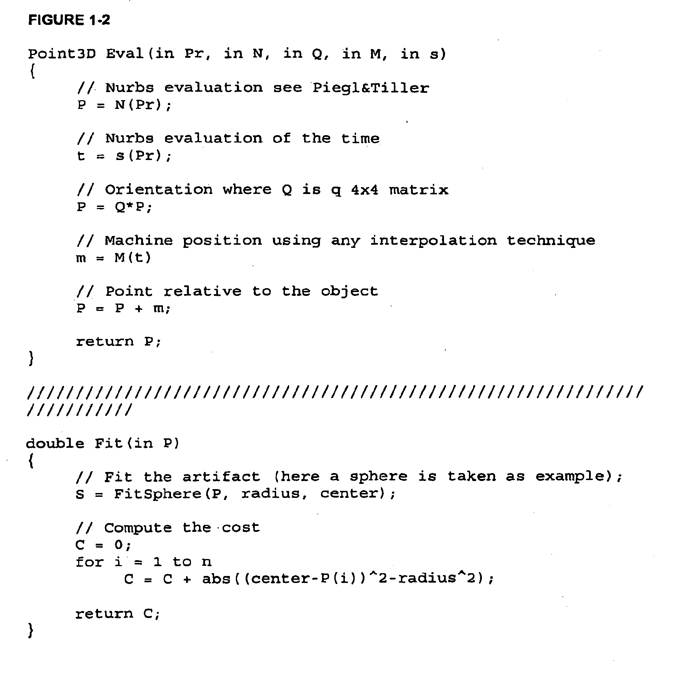

**Figure 1.** An example of an algorithm according to the invention incorporating synchronization. Pr is the array of receiver data (size n), M is the corresponding machine positions (size n), N is the array of control points of the NURBS (size nc), and Q is the qualification matrix (size 6), s is the synchronization matrix.

## SUMMARY OF THE INVENTION

The present invention concerns a method for the calibration, qualification & synchronisation of a point cloud generator in accordance with the claims. It further relates to a computer program therefor.

## DETAILED DESCRIPTION OF THE INVENTION

A "non-contact probe" can be defined as any device mounted on a localizer that through non-contact sensing conducts 1D (distance), 2D or 3D coordinates measurements.

A "localizer" is defined as any system positioning and orientating a non-contact probe in space, that returns the position and/or the orientation of the non-contact probe in 1 D-, 2D-or 3D coordinates. For each position and/or orientation, the time t is given

A "receiver", is an electronic device in the non-contact probe that captures the waves coming from the object to be measured, resulting in one or multiple electrical readings. Most of the time these electrical readings are voltage readings on pixels of a CCD-camera.

An "artifact" is any physical object susceptible to point cloud generation, whose outer shape and/or part thereof is definable using a mathematical function and/or look-up tables. Said artifact may be, for example, a sphere, cylinder, cube or box, two spheres joined together, a dumb-bell, a sphere joined to a cube etc. Said artifact may also be any irregular shape such as a mobile phone, a pen, a calculator etc. The method of obtaining a mathematical function and/or look-up table thereof is known to the skilled artisan. Depending on the geometry of the object, its dimensions may be known with accuracy; alternatively the dimension may not be accuracy known, or not known at all.

A "look-up table" is a data list that defines the shape and dimensions of the object.

A non-contact probe generally comprises of one or more emitter source(s), sending (e.g. light) waves to the object of interest, and one or more receivers, which capture the part of the object that is "hit" by the emitter source. The conversion of the electrical readings of the receiver to an accurate 3D point requires the steps of calibration and qualification executed on beforehand.

A "point cloud generator" is a system that comprises 2 components, namely a non-contact probe and a localizer whereby both components can be used for 1D, 2D or 3D position and/or orientation measurements.

"Calibration" is the procedure to identify the conversion between the electrical reading of the receiver in the non-contact probe and 1D, 2D or 3D point coordinates in SI units. In other words, calibration is the procedure to transform an electrical reading in accurate point coordinates. These point coordinates are calculated relative to a coordinate system connected to the non-contact probe.

"Qualification" is defined as a procedure of completely and accurately identifying the position and orientation of the non-contact probe in the measuring volume of the localizer, possibly using information readily made available by the localizer itself. This procedure is to be performed each time the non-contact probe is mounted on the localizer or each time its position or orientation with respect to the localizer is changed. Thus, qualification is the procedure whereby the position and the orientation of the coordinate system associated with the non-contact probe is defined with respect to a fixed coordinate system.

"Synchronization" is a defined as a procedure of completely and accurately identifying the time stamp of every receiver reading.

Finally, "compensation" is defined as a procedure of making the conversion between the electrical reading of a receiver in the non-contact probe and 1D, 2D or 3D point coordinates using the calculated parameters of the calibration and qualification.

The present invention relates to a method that determines set-up parameters of a non-contact probe mounted on a localizer using only one artifact and the localizer as described in EP 1 361 414 which is incorporated herein by reference. This present method is characterized by some major improvements compared to the state-of-the-art technologies as described below. Therefore, the present method represents not only an easier but also a more time-effective method.

One aspect the present invention allows the calibration and qualification procedure to be carried out in one single step using one artifact, wherein the readings of the probe and localiser are synchronized. The present invention determines parameters pertinent to synchronization simultaneously with calibration and qualification. The simultaneous operation provides a more accurate and faster determination of the parameters, which results in a more accurate activity of the non-contact probe.

Therefore, in one embodiment, the present invention relates to a method for the calibration, qualification and synchronization of a non-contact probe comprising determining the transformation of an electrical reading of the receivers in said non-contact probe in point coordinates relative to the said probe and identifying the position and orientation of the said non-contact probe in the measuring volume of the said localizer, thereby determining calibration, qualification and synchronization parameters simultaneously.

In a one embodiment, said artifact consists of one or more spheres, cylinders, cubes or boxes, any regular or irregular physical object. According to the present invention the entire calibration-qualification-synchronization procedure can thus be totally automated; in other words there is a little or no manual interference and said procedure does not rely upon the skill of the operator. Furthermore, calibration and qualification can be performed at the user's site.

As mentioned, the calibration, qualification and synchronization steps of a non-contact probe depend on a variety of parameters. In another embodiment, the present invention relates to a method for determining the parameters of a non-contact probe in a single step using a single artifact.

The present invention is based on a general mapping function that directly converts a receiver reading into a 3D point. This function depends on various parameters that need to be numerically determined. In the following description, the general mapping function according to the invention is described with use of the conventional division in calibration, qualification and synchronization. However, it is the aim of the invention to provide an approach that mixes these three procedures in one single function. According to the invention, a single measurement procedure to establish the parameters has a greater accuracy than establishing the set of parameters in separated methods.

1. <u>Calibration</u>

The calibration step consists essentially of a mapping from the receiver readings to a 1D, 2D or 3D point relative to a coordinate system connected with the non-contact probe. The dimensions of the point are equal to the dimensions of the receiver. For example a camera with a square CCD-array will produce two-dimensional points after calibration. The goal of the calibration is to express the one-, two- or three-dimensional coordinates of a point in terms of its receiver readings.

The *"mapping"* provides a description of this correspondence. It consists of a function that maps a reading from the receiver domain of all readings to a 1D, 2D or 3D point. Ideally, the mapping function should be able to model various physical effects of the non-contact probe such as the perspective, imperfectness of working principle or heterogeneous reading resolution and sensitivity.

Several methods have already been proposed in the literature that define generic or specialized mapping functions. The simplest method consists of defining one single function that covers the entire mapping area. The form of this function is critical and prior knowledge of the problem is necessary to make an educated choice. The second class of mapping methods is generic; it is able to effectively model any mapping function provided that the number of parameters is sufficiently high. These methods work by a divide-and-conquer approach, dividing the mapping area in smaller area and defining simple *shape* functions for the local mapping. The local mapping is then aggregated into a global mapping.

In the present invention any general mapping function can be used, as long as the function offers enough detail to model an accurate conversion from reading to point. For the sake of generality, all points here are considered to be three dimensional. One or two dimensional point can be represented by a three dimensional point without any loss of information. The general representation is given below where $P_r$ (resp. $P_{3D}{}^c$) represents the receiver reading (resp. 3D point), $f$ is the general mapping function

$$P_{3D}{}^c = f(P_r), \qquad (1)$$

With $f$ defined as

$$f: D \rightarrow \Re^3. \qquad (2)$$

and $R^3$, the three dimensional space and D, the domain of the all possible readings of all receivers:

$$D = \cup_{\forall i} D_i \qquad (3)$$

$$D_i \cap D_j = \varnothing \text{ for } i \neq j \qquad (4)$$

$D_i$, the domain of all possible readings of the $i^{th}$ receiver and this for all receivers.

A crucial question concerns the amount of data needed to compute the actual parameters of the mapping function. Unfortunately, there is no definite answer to this question. It depends on the accuracy needed and on the scale of the phenomenon studied.

## 2. Qualification

Qualification consists of a three-dimensional mapping. The calibration maps the reading onto a point located in the physical space, relative to a coordinate system fixed to the non-contact probe. The exact position of this non-contact probe and the determination of its orientation are the tasks of the qualification. The position and the orientation will be determined relative to a coordinate system fixed to the object to be scanned.

The non-contact probe coordinate system is described by 6 parameters, three translation components and three rotation components. The system can be decoupled into the translation component $q$ of the non-contact probe and in the rotation matrix $Q$. The relation between the localizer and the object is similarly given by its orientation M and translation m. A three-dimensional point $P_{3D}{}^q$ relative to the fixed coordinate system is written as

$$P_{3D}{}^q = M * (Q P_{3D}{}^c + q) + m, \qquad (5)$$

with $P_{3D}{}^c$ a three-dimensional point relative to the non-contact probe coordinate system.

In instances where the value of $m$ depends on $Pr$, the equation may be rewritten as Equation 5.1, which also cover instances when $m$ is independent of $Pr$.

$$P_{3D}{}^q = M * (Q P_{3D}{}^c + q) + m(Pr), \qquad (5.1)$$

Where $m(Pr)$ is the value of $m$ when $m$ depends on Pr.

In general as the localizer moves the non-contact probe and/or the object in space the relative position and orientation of the probe to the object changes. In other words the rotation matrix M and translation component *m* both change during movement.

### 3. Synchronization

During the measurement of an object, the localizer moves and both M and m change continuously, however, the localizer only returns their values at given discrete time steps. Interpolation (linear, parabolic, cubic, or any suitable interpolation scheme (Piegl and Tiller)) are generally used to return a value for intervening time points which can be synchronised with the readings of the receiver. Interpolation of readings from the localizer can be expressed mathematically according to equation (6):

$$M : t \rightarrow M(t) \text{ and } m : t \rightarrow m(t) \tag{6}$$

where M(t) and m(t) are continuous functions of the time t defined from the discrete values of M and m.

In regard of the receiver readings, a synchronization function s that returns a time stamp for every receiver reading, is usually implemented *i.e.*

$$s : Pr \rightarrow t \text{ where } t = s(Pr). \tag{7}$$

In general this function can be any suitable synchronization function of the art, and which can be implemented by the skilled person. It can be defined based on the receiver design, or by use of a general mapping function such as a non-uniform rational B-spline (NURBS) curve. This function, s, is not defined a *priori.* It uses a set of parameters that need to be identified, which requires the use of separate, time-consuming procedures.

A special instance of s, for a receiver that obtains readings at a fixed rate, we can define

$$t_n = s(Pr) = delta + n/f, \tag{8}$$

where $t_n$ is the time stamp of the receiver reading n, delta is a phase shift (in seconds) and f is the receiver frequency (in Hz). The variables delta and/or f can be considered as parameters that need to be identified in the synchronization function s.

Synchronization described above allows a time stamp to be associated with receiver readings which are produced by a probe periodically, regularly, or a combination of these. It also allows localizer readings to be determined at any time stamp associated with the receiver readings. During the measurement of an object, therefore, both probe and localizer readings are synchronized, so improving the accuracy of the information provided by both devices

Using Equation (6), values of M and m at any time t can be readily determined, and using Equation (7), values of t for every receiver reading, Pr can be calculated. Combining Equations (6) and (7), thus, provides a method to obtain the precise values of M and m for every Pr. When M and Pr are synchronised, we have

$$M = M(s(Pr)) \tag{9}$$

It is as aspect of the present invention that the parameters of function s are identified simultaneously with the parameters of calibration and qualification, and not separately.

As described above, the necessary steps to convert individual readings of the receivers into actual three-dimensional coordinates, with (if available) the knowledge of the position and orientation of the probe given by the localizer at discrete time steps, are normally de-coupled. By aggregating these various steps, we can thus express directly a 3D point $P_{3D}{}^q$ (also known as *P* herein) in terms of a receiver reading $P_r$ by

$$P_{3D}{}^q = M(t)^*(Q(f(P_r)) + q) + m(t), \tag{10}$$

or

$$P_{3D}{}^q = M(s(Pr))^* (Q(f(P_r)) + q) + m(s(Pr)), \qquad (10.1)$$

where $f$ is the calibration function, $Q$, $q$ and are the position and orientation of the probe stemming from the qualification; M, m and s are the continuous localiser and receiver time functions. These functions and these symbols have been defined in eqs (1) to (7). Equations (10) and (10.1) contain the following parameters to be defined in the calibration-qualification-synchronization procedure:

- the function $f$ is a general mapping function with enough parameters to accurately model the transformation from receiver reading to 3D point in the probe space. Such functions are known in the art. If for example a polynomial function is chosen as mapping function, then the parameters are the coefficients. The degree and the type of polynomial are not parameters but constants.
- Depending on the accurate information obtained from the localizer, either three translation components (the position $m$), or three rotations (the orientation $Q$), or both are considered as parameters. For example if the localizer is a CMM with accurate information on the position of the probe in the localizer space and the probe performs only parallel movements, the three rotations (the orientation $Q$) are the only parameters.
- The synchronization function s.

All these parameters can be grouped in a parameter set $S$, which includes synchronization parameters, and equation (10.1) can be rewritten as:

$$P_{3D}{}^q = F(P_r, S) \qquad (11)$$

With F the compensation function based on a calibration - qualification - synchronization procedure with parameter set $S$:

$$F: D \to \Re^3 \qquad (12)$$

And $D$ defined as in eqs. (3) and (4).

In another embodiment, the present invention relates to a method of determining calibration, qualification and synchronization parameters, which is based on a generic function, said generic function being a non-uniform rational B-spline function. The present invention relates to a new general procedure or method for determining all these parameters in a single step. In an embodiment the present invention relates to a method of determining a parameter configuration comprising the steps of:

- scanning an single artifact; and
- applying a computational procedure to adjust all said parameters directly and simultaneously using the scanning data.

Said parameter configuration comprises the parameters mentioned above which are required to establish a generic model in which the steps of calibration, qualification and synchronization are integrated.

In one embodiment of the invention, the artifact used for calibration, qualification and synchronization of the non-contact probe is identical to the artifact used for the qualification of probe which is a tactile or contact probe and said artifact is a sphere.

The method of the invention for simultaneous determination of calibration, qualification and synchronization using a single artifact has several key features. Importantly, only one single artifact is used. Also, the exact size, position, or orientation of this artifact is not initially known. Furthermore, all parameters are evaluated concurrently. In addition, the method performs only one scan of the reference object or artifact and very little user interaction is required. Using this method the adjusted parameters are obtained, which can be used in the above-described generic function.

In a preferred embodiment, the present invention relates to a method of determining calibration and qualification parameters comprising the steps of

- scanning a single artifact;

- determining the optimal position, and optionally, the orientation and/or size of said artifact using the scanning data;
- evaluating the quality of said parameter configuration via a multidimensional optimization procedure; and
- determining the best configuration of the parameters.

An example of the procedure is described in more detail as follows: An initial parameter configuration $S$ in equation (11) is chosen. This configuration is used to establish the generic model described above. Subsequently, an artifact is scanned. The data obtained by a scan of this reference object is a series of receiver readings optionally together with the positions and/or orientations of the probe relative to the artifact. When applying the generic model, which was established using the configuration $S$, to this series of receiver readings a cloud of 3D points is obtained. As neither the exact position, orientation nor size of the reference object are known, using the cloud of 3D points the optimal position and optionally the orientation and/or size of the artifact that matches the 3D points is first determined. Note that calculating the optimal orientation or size of an artifact is optional, depending on the geometry of the object, and whether any dimensions are already known; when a sphere is used, for example, the orientation does not need to be determined, as described below; when the artifact is an object of known dimensions, only the position and orientation of the object need to be determined. Once the position, orientation and size of the artifact have been determined, the cloud of 3D points can be "compared" with the scanned artifact, and then the quality of the parameter configuration ($S$) is evaluated. Finally, since a cost or a quality can be assigned to each configuration $S$, a standard multidimensional optimization procedure can be applied to determine the best configuration $S_{best}$.

In the following description, the standard multidimensional optimization procedure is explained in further detail. Designing a proper cost function is crucial in any optimization procedure and it has been the subject of many publications in the prior art. A "good" cost function should represent accurately the model being investigated without being too complex as to prevent any optimization. In other words, a minimum of the cost function should represent an optimal configuration of the parameters while plateau's in the cost function should be avoided to ensure convergence of the iterative algorithm. From a computational point of view, the cost function should also be easy to compute as it needs to be evaluated many times.

A multidimensional optimization procedure of the present invention is disclosed in the following description. In one aspect of the invention, an algorithm starts from an initial configuration $S_{ini}$ and defines it as the current configuration $S_{cur}$. Then, in a loop, the configuration is iteratively adapted, yielding each time a new $S_{cur}$, in an attempt to better match the cloud of 3D points with the artifact shape. The algorithms stops when the accuracy can no longer be improved, i.e. when the cost function is at its minimum.

In a method of the present invention, the evaluation of the cost function consists of two phases. The first phase consists of determining the best position, and optionally size and/or orientation of an artifact using the 3D points obtained with the active configuration $S_{cur}$. Depending of the shape of the artifact a direct computation or an iterative computation is performed.

In the second phase, the distance between the individual 3D points and the artifact are computed and aggregated, using, for example, one or more average square distance, variance, volume, area computation, axis of inertia calculations, or other method known in the art, to give the actual cost of the parameter configuration. In the ideal situation, when all distances are zero, i.e. all points lie perfectly on the artifact, the cost function is zero and the active configuration is optimal. An example of an algorithm is given below:

    1. Choose an initial configuration $S_{ini}$
    2. Set initial configuration as current configuration $S_{cur} = S_{ini}$
    3. Set $S_{best} = S_{cur}$ and the cost $C(S_{best}) = \infty$
    4. While $C(S_{best})$ is not within the desired accuracy (as set by the user), do the following:

        5. Compute the cloud of 3D points from eq. (7), using the receiver readings and $Scur$
        6. Evaluate the best position, and optionally, orientation and/or size of the artifact for the computed 3D points
        7. Compare the virtual artifact with the 3D points to compute the cost $C(S_{cur})$
        8. If $C(S_{cur}) < C(S_{best})$, $S_{best} = S_{cur}$
        9. Choose a new $S_{cur}$ keeping fixed the parameters of f2

At the end of the computation, the parameters of $S_{best}$ are those that give the best representation of the artifact.

Step 6 determines the best position and optionally, the orientation and/or size of the artifact, by comparing a cloud of 3D points generated in step 5 with the artifact. In one aspect of the invention, if the artifact is an object of unknown position, dimension(s) and orientation, but its shape is mathematically defined, the best-fit position, dimension (s) and orientation may be derived by iterative fitting the unknown position, dimensions and orientation using the mathematical description of the shape to the cloud of 3-D points. In another aspect of the invention, if the artifact is an irregular object of accurately known dimensions, its position and orientation may be determined by iteratively fitting the best position and orientation of the object dimensions to the cloud of 3D points. The dimensions may be read, for example, from a look-up table. The method can determine the best position, orientation and size of the artifact, for any combination of available object parameters. The iterative fittings of the artifact to the cloud points may be performed by a shaping-matching model comprising any known methods of the art. Possible shapes of the artifact include cylinders, cubes, boxes, spheres, any irregular or regular shape.

For the purpose of illustration, general shape matching with a sphere will be described, although the procedure is non-limiting for the present invention. A sphere can be described by 3 parameters for its center $c$: $(c_x, c_y, c_z)$, and one parameter for its radius $r$. For every point $p$, with parameters $(p_x, p_y, p_z)$, it is then easy to compute its distance d to the sphere as

$$d = \|p - c\|_2 - r = ((p_x\text{-}c_x)^2+(p_y\text{-}c_y)^2+(p_z\text{-}c_z)^2)^{1/2}\text{-}r \qquad (13)$$

or a pseudo distance

$$d' = \|p - c\|_2^2 - r^2 = (p_x\text{-}c_x)^2+(p_y\text{-}c_y)^2+(p_z\text{-}c_z)^2\text{-}r^2 \qquad (14)$$

For a given set of parameters $(c, r)$, it is then possible to define a cost function:

$$C_{art}(c,r) = \Sigma\, d^2, \qquad (15)$$

or

$$C_{art}(c,r) = \Sigma\, d'^2, \qquad (16)$$

where the sum goes over all points of the receiver(s).

Standard derivation techniques can be used to determine the values of $c$ and $r$ that minimize $C_{art}$. When the cost function $C_{art}$ is non linear, a regular multidimensional optimization procedure can be used to determine the best values of $c$ and $r$.

The results of step 6 is a virtual artifact whose best position, size and orientation have been calculated (or were partly already known). In step 7, the cloud of 3D points generated in step 5 is compared to said virtual artifact, and a cost of fitting is generated for a set of S parameters. The method used to generate the cost (the cost function, C) can be any known in the art, as already mentioned above. The value of S is adjusted until the cost of fitting is minimized. The minimization procedure can be any known in the art.

Thus, the two cost functions C and $C_{art}$ used in the calibration-qualification procedure are described above. The general cost function $C$ is used to find the parameter configuration for the calibration and qualification while the second function $C_{art}$ is used *inside* the first to find the best shape.

According to the above example, only the shape of the sphere is needed and not its actual size. As a consequence, the radius r of the sphere is required to be determined by the shape-matching model $C_{art}$. Of course if, for other shapes, additional information is available, such as a size, an aspect ratio, dimensions etc, they can be easily used to reduce the number of parameters required to be determined by the shape-matching model. In the example provided above in which the artifact is a sphere, were the radius to be already known, the problem would be reduced to the determination of the optimal sphere center $c$ - and so there would only be three parameters to determine.

When robust optimization algorithms are used, the initial configuration is of little importance. However, when the cost function contains many local minima, providing an initial configuration close to the optimal, but unknown, configuration is desirable. With the model according to the present invention, it is also possible to automate this step. Indeed, the model according to the present invention contains two loosely connected entities, namely, the calibration and the qualification. In order to the find an initial good configuration, one of both entities is fixed and the other one is solved.

More precisely, when qualification is not required and hence neglected in the calculation, only the calibration is investigated. When only a calibration is performed, values of $Q$ and $m$ according to equation 10.1 should be known and are fixed in the calculation.

With a fixed calibration, the optimization of, at most, 6 parameters of the qualification can be performed in a straightforward manner using a method of the present invention. When only a qualification is performed, the value of F should be known and fixed in the calculation.

When calibration, qualification and synchronization calculations are performed separately as described in the preceding paragraphs, the values obtained by one calculation may be used as the fixed, known parameter in the other calculation. For example, a qualification-only optimization will produce values of $Q$ and $q$; the values of $Q$ and $q$ so calculated can be used as the fixed values in the calibration-only optimization and in the synchronization only operation. Performing several iterations of separate calibration, qualification and synchronization calculations wherein the parameters obtained from one calculation are used in the other calculation, results in an initial configuration parameter set that is close to the optimal configuration achieved by performing calibration and qualification simultaneously.

With certain choices of fixed parameter subset, the complexity of the optimization problem reduces significantly. For example, if f1 contains the linear parameters of the calibration, the optimization becomes a linear problem and can be solved directly without the need of an iterative procedure. Similarly, if f1 is defined as a continuous function, its derivative can be analytically estimated and hence, faster and more robust optimization techniques may be employed.

Using presently known methods, the synchronization uses qualification and calibration, and must then be performed after these steps. There are two possible choices using the methods in the art:

1. Calibration and qualification are performed with a continuous motion of the localizer without synchronization in which case the results are thus not accurate.

2. Calibration and qualification are performed with discrete motion of the localizer, *i.e.* one must ensure that the localizer is absolutely still for every receiver readings. This is a time consuming procedure.

Hence, using methods of the art either time or accuracy are lost. By simultaneously determining parameters of synchronization with calibration and qualification, these problems are overcome.

The method presented herein allows an unskilled operator to perform a simultaneous calibration, qualification and synchronization of a point cloud generator. The quality of said calibration, qualification and synchronization are independent of the skill of the operator, in contrast to the present methods of the art, which are technically demanding and require a high level of skill and experience.

The method presented herein allows a simultaneous calibration, qualification and synchronization of a point cloud generator within 5 minutes of the generation of the cloud point. The method presented herein allows an improved simultaneous calibration, qualification and synchronization of a point cloud generator within 10, 15, 20, 25, 30, 35, 40, 45, 50, 55, 60, 70, 80, 90, 100, 120, 140,160, 180, 200, 250, 300, 350, 400, 450, or 500 minutes of the generation of the cloud point. The speed of the methods is achieved because no manual interventions are required; the method is automatic.

The method presented herein allows a simultaneous calibration, qualification and synchronization of a point cloud generator without manual intervention, once the first scan has been instructed, in contrast to the present methods of the art, which requires extensive manual interventions and skill to adjust components of the point cloud generator.

In one embodiment of the invention, the minimisation algorithm given in Figure 1 is used. The minimization algorithm uses a Monte-Carlo method where the current calibration, qualifications and synchronization are randomly perturbed and accepted if the resulting set of points is closer to the artifact (see Z. Michalewicz, "Modern Heuristics" for a survey of Monte-Carlo method). The calibration is performed by means of a non-uniform rational B-spline (NURBS) curve or surface depending on the dimension of the receiver. The algorithm uses an order two NURBS with uniform knot vector (see Piegl and Tiller, "The NURBS Book"). The numbers of knots and control points depend on the desired accuracy of the calibration. The qualification is defined as a 4x4 matrix with 6 degrees of freedom.

The single artifact can be use for performing the calibration, qualification and synchronization procedure according to the method of the invention.

In another embodiment, the present invention relates to a computer program stored on a computer readable medium wherein the steps of the method according to the invention are performed. Another embodiment of the invention concerns a computer adapted and programmed to carry out the computer program according to the invention.

A non-contact probe may be configured to perform a method of the invention. This non-contact probe is consequently capable of performing at least 1 and preferably the 2 steps of calibration, qualification and synchronization in a single operation. After these steps have been performed the non-contact probe is ready for industrial use by the end-user, until it is dismounted from the localizer or until its position or orientation is changed with respect to the localizer.

A non-contact device comprising a non-contact probe according to the invention, which is mounted on a localizer, and an artifact may be provided.

**EP 1 754 951 B1**

**Claims**

1. A method for the calibration, qualification and synchronization of a point cloud generator, said point cloud generator comprising a non-contact probe on a localizer, by determining the transformation of an electrical reading of the receivers in said non-contact probe in point coordinates relative to said probe and identifying the position and orientation of the said non-contact probe in the measuring volume of the said localizer, comprising

    a) scanning a single artifact using said point cloud generator,
    b) calculating cloud points, P, using parameters relating to calibration, qualification and synchronization, where synchronization determines the correction to asynchronous data readings between the non-contact probe and localizer,
    c) calculating the position and optionally the orientation and/or size of said artifact using P calculated in step b) and knowledge of the artefact according to a mathematical function and/or look-up tables which define said artifact,
    d) comparing the values of P, with those calculated for the artifact derived from step c),
    e) adjusting parameters relating to calibration, qualification and synchronization, and
    f) repeating steps b) to e) until parameters relating to calibration, qualification synchronization are obtained which provide the closest comparison according to step d), thereby determining calibration, qualification and synchronization parameters simultaneously using the same, single artifact.

2. A method according to claim 1, whereby said artifact is a physical object susceptible to point cloud generation, whose outer shape and/or part thereof is definable using a mathematical function and/or look-up tables.

3. A method according to claim 1 or 2, whereby said artifact is a sphere, cylinder or box.

4. A method according to any of claims 1 to 3, whereby said artifact is a sphere of unknown diameter.

5. A method according to any of claims 1 to 4, whereby said artifact has unknown dimensions prior to the execution of said method.

6. A method according to claims 1 to 4, whereby said artifact has unknown position with respect to said localizer prior to the execution of said method.

7. A method according to any of claims 1 to 6, whereby said method is performed without manual intervention.

8. A method according to any of claims 1 to 6, whereby said method is executed at a user's site.

9. A method according to any of claims 1 to 8, wherein steps b) to f) comprise:

    b) calculating points according to the generic function [2]:

$$P = F(Pr, S) \qquad [2]$$

    - wherein Pr is a reading of a receiver of the non-contact probe,
    - P is a point, calculated from Pr, relative to a fixed coordinate system,
    - S is a set of parameters defining calibration, qualification and synchronisation,
    - F is a compensation function based on a calibration, qualification and synchronization procedure with parameter set S,

    c) calculating the position and optionally the orientation and/or size of said artifact using the values of P obtained in step b),
    d) comparing the values of P, with those calculated for the artifact derived from step c),
    e) adjusting S, and
    f) repeating steps b) to e) until value of S is obtained which provides the closest comparison according to step d).

10. A method according to any of claims 1 to 8 whereby step b) is based on the generic function [1]

$$P = M(s(Pr)) * (Q(f(Pr)) + q) + m(s(Pr)) \qquad [1]$$

where

- Pr is a reading of a receiver of the non-contact probe,
- P is a cloud point, calculated from Pr, relative to a fixed coordinate system,
- f is a general mapping function, that maps receiver readings to 1D, 2D or 3D point coordinates, relative to a coordinate frame fixed to the non-contact probe,
- Q, q are the orientation, position of the non-contact probe relative to the localizer, M, m are the orientation and position of the localizer relative to a fixed coordinate frame for a given value of Pr, s is the time stamp for a given value of Pr; all three with respect to a fixed coordinate frame; none or one or more considered as known parameters.

**11.** A method according to claim 10 wherein f is a non-uniform rational B-spline function.

**12.** A method according to claims 10 or 11 wherein s is a non-uniform rational B-spline function.

**13.** A method according to any of claims 9 to 12 wherein step c) comprises:

g) comparing the points P obtained in step b) to those expected of said artifact according to a mathematical function and/or look-up tables which define said artifact,
h) adjusting one or more of the values corresponding to the position and optionally the orientation and/or size of said artifact, and
i) repeating steps g) and h) until values corresponding to the position, and if calculated orientation and/or size are obtained which provide the closest comparison according to step g).

**14.** A method according to claims 9 to 19 wherein the values calculated for the artifact as mentioned in step d) are derived from a mathematical function and/or look-up tables which define said artifact, the values corresponding to the position, and if calculated orientation and/or size as obtained in step c).

**15.** A method according to any of claims 9 to 14, wherein the comparison performed in step d) comprises one or more average square distance, variance, volume, area and/or axis of inertia calculations.

**16.** A computer program stored on a computer readable medium, suitable for performing a method according to any of claims 1 to 15.

**17.** Computer comprising a computer readable medium adapted and programmed to carry out the computer program according to claim 16.

**Patentansprüche**

**1.** Verfahren zum Kalibrieren, Charakterisieren und Synchronisieren eines Punktwolkengenerators, wobei der Punktwolkengenerator eine berührungsfreie Sonde an einem Lokalisierer umfasst, durch Bestimmen der Transformation eines elektrischen Messwertes des Empfängers in der berührungsfreien Sonde in Punktkoordinaten relativ zu der Sonde und Identifizieren der Position und Ausrichtung der berührungsfreien Sonde im Messvolumen des Lokalisierers, umfassend

a) das Scannen eines einzelnen Artefaktes unter Verwendung des Punktwolkengenerators,
b) Berechnen der Wolkenpunkte, P, unter Verwendung von Parametern, die die Kalibrierung, Charakterisierung und Synchronisation betreffen, wobei die Synchronisation die Korrektur zu asynchronen Datenwerten zwischen der berührungsfreien Sonde und dem Lokalisierer bestimmt,
c) Berechnen der Position und optional der Ausrichtung und/oder der Größe des Artefaktes unter Verwendung von P, das in Schritt b) berechnet wurde, und von Wissen über den Artefakt gemäß einer mathematischen Funktion und/oder Verweistabellen, die den Artefakt definieren,
d) Vergleichen der Werte von P mit den denjenigen, die für das Artefakt berechnet wurden, wie aus Schritt c) abgeleitet,
e) Einstellen der Parameter, die das Kalibrieren, Charakterisieren und das Synchronisieren betreffen, und
f) Wiederholen der Schritte b) bis e), bis Parameter, die das Kalibrieren, Charakterisieren und das Synchronisieren betreffen, erhalten werden, die für den kleinsten Vergleichsunterschied gemäß Schritt d) sorgen, und damit die Kalibrierungs-, Charakterisierungs- und Synchronisationsparameter gleichzeitig unter Verwendung desselben einzelnen Artefaktes bestimmen.

2. Verfahren nach Anspruch 1, wobei das Artefakt ein physisches Objekt ist, welches empfindlich gegenüber der Erzeugung der Punktwolke ist, deren äußere Form und/oder ein Teil derselben mittels einer mathematischen Funktion und/oder Verweistabellen definiert werden kann.

3. Verfahren nach Anspruch 1 oder 2, wobei das Artefakt eine Kugel, ein Zylinder oder ein Kasten ist.

4. Verfahren nach einem der Ansprüche 1 bis 3, wobei das Artefakt eine Kugel mit unbekanntem Durchmesser ist.

5. Verfahren nach einem der Ansprüche 1 bis 4, wobei das Artefakt vor dem Ausführen des Verfahrens unbekannte Abmessungen hat.

6. Verfahren nach den Ansprüchen 1 bis 4, wobei das Artefakt in Bezug auf den Lokalisierer vor dem Ausführen des Verfahrens eine unbekannte Position hat.

7. Verfahren nach einem der Ansprüche 1 bis 6, wobei das Verfahren ohne manuellen Eingriff ausgeführt ist.

8. Verfahren nach einem der Ansprüche 1 bis 6, wobei das Verfahren am Ort eines Nutzers ausgeführt ist.

9. Verfahren nach einem der Ansprüche 1 bis 8, wobei die Schritte b) bis f) umfassen:

b) Berechnen von Punkten gemäß der allgemeinen Funktion [2]:

$$P = F(Pr, S) \quad [2]$$

- wobei Pr ein Messwert eines Empfängers der berührungsfreien Sonde ist,
- P ein Punkt, berechnet aus Pr, relativ zu einem festen Koordinatensystem ist,
- S ein Satz von Parametern ist, der die Kalibrierung, Charakterisierung und Synchronisation definiert,
- F eine Kompensationsfunktion ist, die auf einem Kalibrierungs-, Charakterisierungs- und Synchronisierungsverfahren mit dem Parametersatz S beruht,

c) Berechnen der Position und optional der Ausrichtung und/oder Größe des Artefaktes unter Verwendung der Werte von P, die in Schritt b) erhalten sind,
d) Vergleichen der Werte von P mit den denjenigen, die für das Artefakt berechnet wurden, wie aus Schritt c) abgeleitet,
e) Einstellen von S, und
f) Wiederholen der Schritte b) bis e), bis der Wert von S erhalten ist, welcher für den kleinsten Vergleichsunterschied gemäß Schritt d) sorgt.

10. Verfahren nach einem der Ansprüche 1 bis 8, wobei Schritt b) auf der allgemeinen Funktion [1] beruht

$$P = M(s(Pr)) * (Q(f(Pr)) + q) + m(s(Pr)) \quad [1]$$

wobei

- Pr ein Messwert eines Empfängers der berührungsfreien Sonde ist,
- P ein Punkt, berechnet aus Pr, relativ zu einem festen Koordinatensystem ist,
- f eine allgemeine Abbildungsfunktion ist, die die Empfängermesswerte auf 1D-, 2D- oder 3D-Punktkoordinaten relativ zu einem Koordinatenrahmen abbildet, der fest mit der berührungsfreien Sonde verbunden ist,
- Q, q die Ausrichtung, Position der berührungsfreien Sonde relativ zum Lokalisierer sind, M, m die Ausrichtung und Position des Lokalisierers relativ zum festen Koordinatenrahmen für einen gegebenen Wert von Pr sind, s der Zeitstempel für einen gegebenen Wert von Pr ist; alle drei Werte sich auf einen festen Koordinatenrahmen beziehen; keiner oder einer oder mehrere als bekannte Parameter angesehen sind.

11. Verfahren nach Anspruch 10, wobei f eine ungleichförmige rationale B-Splinefunktion ist.

12. Verfahren nach Anspruch 10 oder 11, wobei s eine ungleichförmige rationale B-Splinefunktion ist.

13. Verfahren nach einem der Ansprüche 9 bis 12, wobei Schritt c) umfasst:

g) Vergleichen der Punkte P, die in Schritt b) erhalten wurden, mit denen, die vom Artefakt gemäß einer mathematischen Funktion und/oder Verweistabellen, die das Artefakt definieren, erwartet werden,
h) Einstellen von einem oder mehreren der Werte, die der Position und optional der Ausrichtung und/oder der Größe des Artefaktes entsprechen, und
i) Wiederholen der Schritte g) und h), bis Werte, die der Position und, falls berechnet, der Ausrichtung und/oder der Größe entsprechen, erhalten sind, welche für den kleinsten Vergleichsunterschied gemäß Schritt g) sorgen.

14. Verfahren nach Anspruch 9 bis 19, wobei die Werte, die für das Artefakt berechnet sind, wie in Schritt d) erwähnt, aus einer mathematischen Funktion und/oder Verweistabellen abgeleitet sind, welche das Artefakt definieren, wobei die Werte der Position und, falls berechnet, der Ausrichtung und/oder der Größe entsprechen, wie in Schritt c) erhalten.

15. Verfahren nach einem der Ansprüche 9 bis 14, wobei der Vergleich, der in Schritt d) ausgeführt ist, eine oder mehrere quadratische Abstands-, Varianz-, Volumen, Flächen- und/oder Trägheitsachsenberechnungen umfasst.

16. Computerprogramm, das auf einem computerlesbaren Medium gespeichert ist, welches zum Ausführen eines Verfahrens gemäß einem der Ansprüche 1 bis 15 geeignet ist.

17. Computer, der ein computerlesbares Medium umfasst, welches zum Ausführen des Computerprogramms gemäß Anspruch 16 ausgelegt und programmiert ist.

**Revendications**

1. Procédé pour le calibrage, la qualification et la synchronisation d'un générateur de nuage de points, ledit générateur de nuage de points comprenant une sonde sans contact sur un localisateur, en déterminant la transformation d'un relevé électrique des récepteurs dans ladite sonde sans contact en coordonnées de points par rapport à ladite sonde et en identifiant la position et l'orientation de ladite sonde sans contact dans le volume de mesure dudit localisateur, comprenant

a) le balayage d'un artefact unique en utilisant ledit générateur de nuage de points,
b) le calcul de points de nuage, P, en utilisant des paramètres relatifs au calibrage, à la qualification et à la synchronisation, où la synchronisation détermine la correction en relevés de données asynchrones entre la sonde sans contact et le localisateur,
c) le calcul de la position et optionnellement de l'orientation et/ou de la taille dudit artefact en utilisant P calculé à l'étape b) et la connaissance de l'artefact d'après une fonction mathématique et/ou des tables de recherche qui définissent ledit artefact,
d) la comparaison des valeurs de P à celles calculées pour l'artefact dérivées de l'étape c),
e) le réglage de paramètres relatifs au calibrage, à la qualification et à la synchronisation, et
f) la répétition des étapes b) à e) jusqu'à obtenir les paramètres relatifs au calibrage, à la qualification et à la synchronisation qui fournissent la comparaison la plus proche d'après l'étape d), en déterminant de ce fait les paramètres de calibrage, de qualification et de synchronisation simultanément en utilisant le même artefact unique.

2. Procédé selon la revendication 1, dans lequel ledit artefact est un objet physique susceptible d'une génération de nuage de points, dont la forme et/ou la partie extérieure sont définissables en utilisant une fonction mathématique et/ou des tables de recherche.

3. Procédé selon la revendication 1 ou 2, dans lequel ledit artefact est une sphère, un cylindre ou une boîte.

4. Procédé selon l'une quelconque des revendications 1 à 3, dans lequel ledit artefact est une sphère de diamètre inconnu.

5. Procédé selon l'une quelconque des revendications 1 à 4, dans lequel ledit artefact a des dimensions inconnues avant l'exécution dudit procédé.

6. Procédé selon l'une quelconque des revendications 1 à 4, dans lequel ledit artefact a une position inconnue par rapport au dit localisateur avant l'exécution dudit procédé.

7. Procédé selon l'une quelconque des revendications 1 à 6, dans lequel ledit procédé est effectué sans intervention manuelle.

8. Procédé selon l'une quelconque des revendications 1 à 6, dans lequel ledit procédé est exécuté sur un site d'un utilisateur.

9. Procédé selon l'une quelconque des revendications 1 à 8, dans lequel les étapes b) à f) comprennent :

   b) le calcul de points d'après la fonction générique [2] :

$$P = F(Pr, S) \quad [2]$$

   - où Pr est un relevé d'un récepteur de la sonde sans contact,
   - P est un point, calculé à partir de Pr, par rapport à un système de coordonnées fixes,
   - S est un ensemble de paramètres définissant le calibrage, la qualification et la synchronisation,
   - F est une fonction de compensation basée sur une procédure de calibrage, de qualification et de synchronisation avec l'ensemble de paramètres S,

   c) le calcul de la position et optionnellement de l'orientation et/ou de la taille dudit artefact en utilisant les valeurs de P obtenues à l'étape b),
   d) la comparaison des valeurs de P à celles calculées pour l'artefact dérivé de l'étape c),
   e) le réglage de S, et
   f) la répétition des étapes b) à e) jusqu'à obtenir la valeur de S qui fournit la comparaison la plus proche d'après l'étape d).

10. Procédé selon l'une quelconque des revendications 1 à 8, dans lequel l'étape b) est basée sur la fonction générique [1]

$$P = M(s(Pr)) * (Q(f(Pr)) + q) + m(s(Pr)) \quad [1]$$

où

   - Pr est un relevé d'un récepteur de la sonde sans contact,
   - P est un point de nuage, calculé à partir de Pr, par rapport à un système de coordonnées fixes,
   - f est une fonction de cartographie générale qui cartographie les relevés de récepteur à des coordonnées de points 1D, 2D ou 3D dans un système de coordonnées fixes pour la sonde sans contact,
   - S est un ensemble de paramètres définissant le calibrage, la qualification et la synchronisation,
   - Q, q sont l'orientation et la position de la sonde sans contact par rapport au localisateur, M, m sont l'orientation et la position du localisateur par rapport à un système de coordonnées fixes pour une valeur donnée de Pr, s est l'horodatage pour une valeur donnée de Pr ; tout cela dans un système de coordonnées fixes ; aucun ou un ou plusieurs paramètres étant considérés comme étant connus.

**11.** Procédé selon la revendication 10, dans lequel f est une fonction B-spline rationnelle non uniforme.

**12.** Procédé selon la revendication 10 ou 11, dans lequel s est une fonction B-spline rationnelle non uniforme.

**13.** Procédé selon l'une quelconque des revendications 9 à 12, dans lequel l'étape c) comprend:

g) la comparaison des points P obtenus à l'étape b) à ceux prévus dudit artefact d'après une fonction mathématique et/ou des tables de recherche qui définissent ledit artefact,
h) le réglage d'une ou plusieurs des valeurs correspondant à la position et optionnellement l'orientation et/ou la taille dudit artefact, et
i) la répétition des étapes g) et h) jusqu'à obtenir des valeurs correspondant à la position, et si cela est calculé l'orientation et/ou la taille, qui fournissent la comparaison la plus proche d'après l'étape g).

**14.** Procédé selon l'une quelconque des revendications 9 à 19, dans lequel les valeurs calculées pour l'artefact comme cela est mentionné à l'étape d) sont dérivées d'une fonction mathématique et/ou de tables de recherche qui définissent ledit artefact, les valeurs correspondant à la position, et si cela est calculé l'orientation et/ou la taille, comme cela est obtenu à l'étape c).

**15.** Procédé selon l'une quelconque des revendications 9 à 14, dans lequel la comparaison effectuée à l'étape d) comprend un ou plusieurs des calculs du carré de la distance moyenne, de la variance, du volume, de la surface et/ou de l'axe d'inertie.

**16.** Programme informatique stocké sur un support lisible par ordinateur apte à effectuer un procédé selon l'une quelconque des revendications 1 à 15.

**17.** Ordinateur comprenant un support lisible par ordinateur adapté et programmé pour effectuer le programme informatique selon la revendication 16.

**FIGURE 1-1**

```
void CalibrateAndQualify(in Pr, in M, out N, out Q, out s)
{
      // Initialization (set to zero)
      N = 0;
      Q = 0;
      C = 1e100;
      s = 0 ;

      for iter = 1 to 10000
      {
            // Perturb the current nurbs
            for i = 1 to nc
                  Nnew(i) = N(i) + rand(-1,1);

            // Perturb the current orientation
            for i = 1 to 6
                  Qnew(i) = Q(i) + rand(-1,1);

            // Perturb the current synchronization
            for i = 1 to nv
                  snew(i) = s(i) + rand(-1,1);

            // Compute the 3D points
            for i = 1 to n
                  P3(i) = Eval(Pr(i), Nnew, Qnew, M, s);

            // Fit the points to the artifact
            Cnew = Fit(P3);

            // Update the best calibration/qualification so far
            if (Cnew < C)
            {
                  C = Cnew
                  N = Nnew;
                  Q = Qnew;
                  s = snew;
            }

            // Stop if necessary
            if (C < tol)
                  return;
      }
}
/////////////////////////////////////////////////////////////////////
////////////
```

**FIGURE 1-2**

```
Point3D Eval(in Pr, in N, in Q, in M, in s)
{
      // Nurbs evaluation see Piegl&Tiller
      P = N(Pr);

      // Nurbs evaluation of the time
      t = s(Pr);

      // Orientation where Q is q 4x4 matrix
      P = Q*P;

      // Machine position using any interpolation technique
      m = M(t)

      // Point relative to the object
      P = P + m;

      return P;
}


/////////////////////////////////////////////////////////////////////
///////////

double Fit(in P)
{
      // Fit the artifact (here a sphere is taken as example);
      S = FitSphere(P, radius, center);

      // Compute the cost
      C = 0;
      for i = 1 to n
            C = C + abs((center-P(i))^2-radius^2);

      return C;
}
```

**EP 1 754 951 B1**

### Patent documents cited in the description

- EP 1361414 A
- WO 0039522 A
- WO 0041141 A
- JP 2000180103 B
- WO 0107866 A